# FASCICULE DE BREVET EUROPEEN

(11) **EP 3 829 913 B1**
(45) Date de publication et mention de la délivrance du brevet: **10.08.2022**
(21) Numéro de dépôt: 19735615.7
(22) Date de dépôt: 06.06.2019
(51) Int. Cl.: B60K 6/448, B60K 6/52, B60K 17/356, B60W 20/14, B60W 10/06, B60W 10/08, B60W 20/13

(54) **PROCÉDÉ DE GESTION DE RECHARGE D'UN STOCKEUR D'ÉNERGIE D'UN VÉHICULE AUTOMOBILE À MOTORISATION HYBRIDE ET À QUATRE ROUES MOTRICES**
VERFAHREN ZUR VERWALTUNG DES NACHLADENS EINES ENERGIESPEICHERS EINES KRAFTFAHRZEUGES MIT HYBRIDANTRIEB UND VIER ANTRIEBSRÄDERN
METHOD FOR MANAGING THE RECHARGING OF AN ENERGY STORAGE DEVICE OF A MOTOR VEHICLE WITH HYBRID DRIVE AND FOUR DRIVE WHEELS

(30) Priorité: 30.07.2018 FR 1857084
(43) Date de publication de la demande: 09.06.2021
(73) Titulaire: PSA Automobiles SA, 78300 Poissy (FR)
(72) Inventeur: MILHAU, Yohan, 78630 ORGEVAL (FR)
(86) Numéro de dépôt international: PCT/FR2019/051348
(87) Numéro de publication internationale: WO 2020/025865

(56) Documents cités:
- EP-A1- 3 296 134
- WO-A1-2014/027152
- WO-A1-2014/027153
- DE-A1-102011 056 168

## Description

L'invention a trait à la recharge d'un stockeur d'énergie d'un véhicule automobile à motorisation hybride, et plus particulièrement à la gestion de cette recharge en fonction d'instructions de couples de la motorisation du véhicule automobile.

Un véhicule automobile à motorisation hybride comprend généralement un moteur thermique et une source motrice utilisant une énergie différente que le moteur thermique. Le moteur thermique est couplé à ladite source motrice et la source motrice est couplée à au moins une roue du véhicule automobile.

Le moteur thermique ainsi que la source motrice sont indépendamment aptes à fournir un couple Ce dit entrainant et un couple Cr dit résistif à ladite au moins une roue à laquelle la source motrice est couplée.

Le couple Ce entrainant confère une force à ladite au moins une roue du véhicule automobile mouvant le véhicule automobile. A l'inverse, le couple Cr résistif confère une force à ladite au moins une roue ralentissant le déplacement du véhicule automobile ou contrant un déplacement potentiel de celui-ci si le véhicule automobile est, par exemple, disposé dans une pente et le moteur thermique et/ou la source motrice maintient le véhicule automobile statique dans cette pente.

Un véhicule automobile à motorisation hybride comprend également un stockeur d'énergie permettant d'alimenter la source motrice pour que celle-ci puisse fournir ledit couple Ce entrainant à la roue du véhicule automobile à laquelle la source motrice est couplée.

La source motrice est également apte, lorsque celle-ci fournit ledit couple Cr résistif, à recharger le stockeur d'énergie.

Il est par exemple connu des documents de brevet DE-A1-102011056168 ou EP-A1-3296134 ou encore WO-A1-2014027153 des procédés de gestion de recharge du stockeur d'énergie du véhicule automobile à motorisation hybride.

Il est connu, de définir, en fonction de la quantité d'énergie stockée par le stockeur d'énergie, un seuil de quantité d'énergie stockée dit de recharge délestable et un seuil de quantité d'énergie stockée dit de recharge prioritaire généralement inférieur au seuil de recharge délestable.

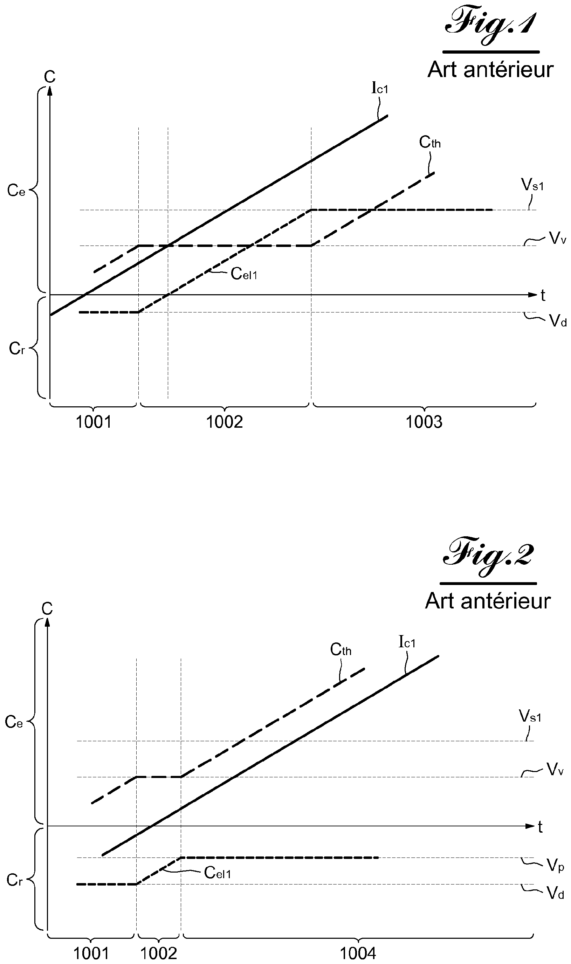

Un procédé connu de gestion de recharge du stockeur d'énergie du véhicule automobile à motorisation hybride est représenté sur les graphiques des figures 1 et 2.

Le graphique des figures 1 et 2 représente une instruction Ic1 de couple primaire (en trait plein), un couple Cth du moteur thermique (en trait pointillé large) et un couple Cel1 de la source motrice (en trait pointillé fin).

Ce procédé de gestion de recharge du stockeur d'énergie impose le couple Cth du moteur thermique et le couple Cel1 de la source motrice pour la réalisation de l'instruction Ic1 de couple primaire du véhicule automobile.

Les figures 1 et 2 représentent un couple en fonction du temps. D'une manière générale, dans tout le texte de ce document, les couples Ce entrainants, conférant une force au véhicule automobile permettant de mouvoir le véhicule automobile, sont illustrés positivement et les couples Cr résistifs, conférant une force au véhicule automobile permettant de ralentir le déplacement ou le déplacement potentiel du véhicule automobile, sont représentés négativement. Le signe de chaque couple doit donc être pris en considération pour les notions de supérieur, inférieur, augmentation, diminution, limitation, ou les sommes. Par contre, par convention, la notion relative de dépassement prendra en compte la valeur absolue de ces couples. Ainsi les couples de recharge sont tous des couples négatifs.

La figure 1 représente le résultat d'un procédé connu de gestion de recharge du stockeur d'énergie lorsque la quantité d'énergie stockée est inférieure au seuil de recharge délestable et supérieure au seuil de recharge prioritaire.

Dans une étape 1001 dite de recharge délestable le couple Cth du moteur thermique est inférieur à une valeur Vv de couple virtuelle et le couple Cel1 de la source motrice est résistif pour recharger le stockeur d'énergie.

Le couple Cth du moteur thermique est supérieur à l'instruction Ic1 de couple primaire pour permettre la réalisation de l'instruction Ic1 de couple primaire du véhicule automobile ainsi que la réalisation du couple Cel1 de la source motrice, ce dernier étant sensiblement égal à une valeur de couple Vd de recharge délestable.

Dans une étape 1002 dite de limitation virtuelle, le couple Cth du moteur thermique est égal à la valeur Vv de couple virtuelle et le couple Cel1 de la source motrice est inférieur à une valeur Vs1 de couple de saturation.

Le couple Cth du moteur thermique, maintenu à la valeur Vv de couple virtuelle, permet d'éviter une surconsommation du moteur thermique qui, dans ce cas de figure, s'avérerait inutile.

Le couple Cel1 de la source motrice augmente alors, diminuant la recharge du stockeur d'énergie, pour permettre la réalisation de l'instruction Ic1 de couple primaire.

Au cours de l'étape 1002 de limitation virtuelle, le couple Cel1 de la source motrice devient entrainant et s'ajoute au couple Cth du moteur thermique pour réaliser l'instruction Ic1 de couple primaire. La source motrice ne permet donc plus de recharger le stockeur d'énergie mais utilise l'énergie du stockeur d'énergie pour fonctionner.

Dans une étape 1003 dite de saturation, le couple Cel1 de la source motrice est égal à la valeur Vs1 de couple de saturation.

Le couple Cth du moteur thermique devient alors supérieur à la valeur Vv de couple virtuelle pour permettre la réalisation de l'instruction Ic1 de couple primaire.

La figure 2 représente le résultat du procédé de gestion de recharge du stockeur d'énergie lorsque la quantité d'énergie stockée par le stockeur d'énergie est inférieure au seuil de recharge prioritaire.

Une étape 1001 de recharge délestable identique à celle décrite pour la figure 1 est réalisée.

Dans une étape 1002 de limitation virtuelle, le couple Cth du moteur thermique est égal à la valeur Vv de couple virtuelle et le couple Cel1 de la source motrice est inférieur à une valeur de couple Vp de recharge prioritaire.

La valeur de couple Vp de recharge prioritaire est supérieure à la valeur de couple Vd de recharge délestable de sorte que, lorsque le couple Cel1 de la source motrice est sensiblement égal à la valeur de couple Vp de recharge prioritaire, la source motrice consomme moins d'énergie mais recharge moins le stockeur d'énergie que lorsque le couple Cel1 de la source motrice est sensiblement égal à la valeur de couple Vd de recharge délestable.

Le couple Cth du moteur thermique, maintenu à la valeur Vv de couple virtuelle, permet d'éviter une surconsommation du moteur thermique qui, dans ce cas de figure, s'avèrerait inutile.

Le couple Cel1 de la source motrice augmente alors, diminuant la recharge du stockeur d'énergie, pour permettre la réalisation de l'instruction Ic1 de couple primaire.

Dans une étape 1004 dite de recharge prioritaire, le couple Cel1 de la source motrice est égal à la valeur de couple Vp de recharge prioritaire forçant la continuation de la recharge du stockeur d'énergie.

Le couple Cth du moteur thermique devient alors supérieur à la valeur Vv de couple virtuelle pour permettre la réalisation de l'instruction Ic1 de couple primaire.

Ce procédé connu de gestion de la recharge du stockeur d'énergie permet de recharger le stockeur d'énergie en fonction de sa quantité d'énergie stockée tout en limitant la consommation du moteur thermique et en réalisant l'instruction Ic1 de couple primaire.

On connait par exemple du document de brevet WO-A1-2014027152 un procédé selon le préambule de la revendication 1.

Cependant, les véhicules automobiles à motorisation hybride et comprenant plusieurs roues motrices comportent généralement un moteur thermique couplé à une première source motrice elle-même couplée à au moins une première roue du véhicule automobile et une deuxième source motrice couplée à au moins une deuxième roue du véhicule automobile. La motricité de la au moins une première roue et de la au moins une deuxième roue sont indépendantes.

Dans ces véhicules automobiles, une instruction Icg de couple global est répartie entre le moteur thermique, la première source motrice couplée au moteur thermique et la deuxième source motrice. La deuxième source motrice consomme ainsi l'énergie stockée par le stockeur d'énergie compliquant la gestion de la recharge du stockeur d'énergie.

L'objectif de l'invention est de proposer un procédé de gestion de recharge d'un stockeur d'énergie d'un véhicule automobile à motorisation hybride et comprenant plusieurs roues motrices, lesdites roues ayant chacune une motricité pouvant être gérée indépendamment.

A cet effet, il est proposé, en premier lieu, un procédé de gestion de recharge d'un stockeur d'énergie d'un véhicule automobile comprenant un moteur thermique en fonctionnement, une première source motrice non thermique couplée au moteur thermique et à au moins une première roue du véhicule automobile, ainsi qu'une deuxième source motrice non thermique couplée à au moins une deuxième roue du véhicule automobile, la première source motrice non thermique et la deuxième source motrice non thermique étant chacune aptes à échanger de l'énergie avec ledit stockeur d'énergie, le procédé de gestion comprenant une étape d'interdiction de dépassement d'une valeur de couple dite délestable pour la recharge du stockeur d'énergie par la somme des couples des première et deuxième sources motrices non thermiques, une étape de commande d'un couple global aux roues négatif, ce couple global étant réparti entre la au moins une première roue et la au moins une deuxième roue, une étape de détection d'un dépassement de la valeur de couple de recharge délestable par le couple de la deuxième source motrice non thermique et, en réaction à ladite étape de détection, une étape de limitation du couple généré par la première source motrice non thermique et d'autorisation de dépassement de ladite valeur de couple de recharge délestable par la somme des couples des première et deuxième sources motrices non thermiques pour la recharge du stockeur d'énergie.

Ce couple global aux roues négatif est représentatif d'une étape de commande de freinage du véhicule. Cette étape de freinage est par exemple la conséquence d'un enfoncement faible ou nul d'une commande d'accélération telle qu'une pédale d'accélérateur, ou la conséquence de l'appui sur une pédale de frein ou encore de l'activation de stratégies de freinage piloté ou d'une aide automatisée à la conduite.

Le procédé présenté permet ainsi la gestion de la recharge du stockeur d'énergie d'un véhicule automobile à motorisation hybride et comprenant plusieurs roues motrices, lesdites roues ayant chacune une motricité apte à être gérée indépendamment. Ce procédé de gestion empêche une consommation d'énergie par la première source motrice, stockée dans le stockeur d'énergie, lors d'une étape de commande du freinage du véhicule automobile.

Diverses caractéristiques supplémentaires peuvent être prévues, seules ou en combinaison :
- lors de l'étape de limitation, le couple généré par la première source motrice non thermique est limité à une valeur nulle ;
- le procédé comprend une étape de recharge du stockeur d'énergie dite de recharge prioritaire dans laquelle la somme du couple de la première source motrice non thermique et du couple de la deuxième source motrice non thermique est sensiblement égale à une valeur de couple de recharge prioritaire supérieure à la valeur de couple de recharge délestable ;
- le procédé comprend une étape dite de limitation virtuelle du couple du moteur thermique à une valeur de couple virtuelle tant que le couple de la source motrice est inférieur à une valeur de couple de saturation.

Il est proposé, en deuxième lieu, un véhicule automobile à motorisation hybride, le véhicule automobile comprenant :
- un moteur thermique,
- une première source motrice non thermique couplée au moteur thermique et à au moins une première roue du véhicule automobile,
- une deuxième source motrice non thermique couplée à au moins une deuxième roue du véhicule automobile par le biais d'un deuxième système de couplage,
- un stockeur d'énergie relié à la première source motrice non thermique et à la deuxième source motrice non thermique, la première source motrice non thermique et la deuxième source motrice non thermique étant aptes à échanger de l'énergie avec ledit stockeur d'énergie,
- un moyen de mis en œuvre du procédé de gestion de recharge du stockeur d'énergie tel que précédemment décrit.

Diverses caractéristiques supplémentaires peuvent être prévues, seules ou en combinaison :
- la première source motrice non thermique et la deuxième source motrice non thermique sont des machines électriques et le stockeur d'énergie est une batterie ;
- la première source motrice non thermique est couplée aux roues avant du véhicule automobile et la deuxième source motrice non thermique est couplée aux roues arrières du véhicule automobile ;
- la première source motrice non thermique est couplée à ladite au moins une première roue par le biais d'une boîte de vitesse ;
- le moteur thermique est couplé à la première source motrice non thermique par le biais d'un premier système de couplage ;
- le stockeur d'énergie est relié à la première source motrice non thermique par le biais d'un onduleur et à la deuxième source motrice non thermique par le biais d'un autre onduleur.

L'invention sera mieux comprise, et d'autres buts, caractéristiques, détails et avantages de celle-ci apparaîtront plus clairement dans la description explicative qui va suivre faite en référence aux dessins annexés donnés uniquement à titre d'exemple illustrant plusieurs modes de réalisation de l'invention et dans lesquels :
- la figure 1 est un graphique représentant un couple en fonction du temps illustrant un procédé de gestion selon l'art antérieur lorsqu'une quantité d'énergie stockée par un stockeur d'énergie est inférieure à un seuil dit de recharge délestable et supérieure à un seuil dit de recharge prioritaire ;
- la figure 2 est un graphique représentant un couple en fonction du temps illustrant le procédé de gestion selon l'art antérieur lorsque la quantité d'énergie stockée par le stockeur d'énergie est inférieure au seuil de recharge prioritaire ;
- la figure 3 est une vue schématique d'un véhicule automobile selon un mode de réalisation de l'invention ;
- la figure 4 est une vue schématique d'un véhicule automobile selon un mode de réalisation différent ;
- la figure 5 est un graphique représentant un couple en fonction du temps illustrant un procédé de gestion selon l'invention lorsque la quantité d'énergie stockée par le stockeur d'énergie est supérieure au seuil de recharge délestable ;
- la figure 6 est un graphique représentant un couple en fonction du temps illustrant un procédé de gestion selon l'invention lorsque la quantité d'énergie stockée par le stockeur d'énergie est inférieure au seuil de recharge délestable et supérieure au seuil de recharge prioritaire ;
- la figure 7 est un graphique représentant un couple en fonction du temps illustrant le procédé de gestion selon l'invention lorsque la quantité d'énergie stockée par le stockeur d'énergie est inférieure au seuil de recharge prioritaire.

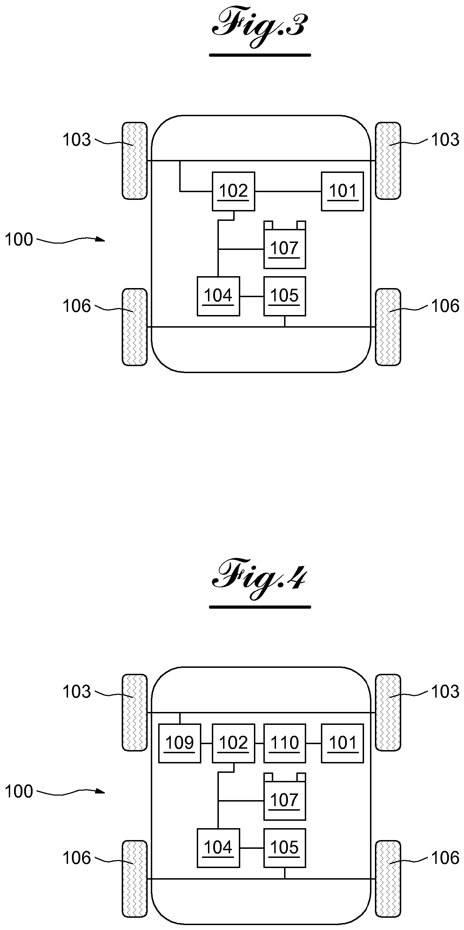

La figure 3 représente un véhicule 100 automobile à motorisation hybride comprenant un moteur 101 thermique et une première source 102 motrice. La première source 102 motrice est couplée au moteur 101 thermique. La première source 102 motrice est également couplée à au moins une première roue 103 du véhicule 100 automobile.

Le véhicule 100 automobile comprend également une deuxième source 104 motrice et un deuxième système 105 de couplage couplant la deuxième source 104 motrice à au moins une deuxième roue 106 du véhicule 100 automobile. La au moins une deuxième roue 106 est différente de la au moins une première roue 103.

Le moteur 101 thermique, la première source 102 motrice et la deuxième source 104 motrice sont, de manière indépendante, aptes à fournir un couple Ce dit entrainant et un couple Cr dit résistif respectivement à ladite au moins une première roue 103 et à ladite au moins une deuxième roue 106.

Le couple Ce entrainant confère une force dirigée mouvant le véhicule 100 automobile. A l'inverse, le couple Cr résistif confère une force ralentissant le déplacement du véhicule 100 automobile ou contrant un déplacement potentiel de celui-ci si le véhicule 100 automobile est, par exemple, disposé dans une pente et le moteur 101 thermique, la première source 102 motrice et/ou la deuxième source 104 motrice maintient le véhicule 100 automobile statique dans cette pente.

Le véhicule 100 automobile comprend un stockeur 107 d'énergie permettant d'alimenter la première source 102 motrice et la deuxième source 104 motrice pour que celles-ci puissent fournir ledit couple Ce entrainant.

La première source 102 motrice et la deuxième source 104 motrice sont également aptes, lorsque celles-ci fournissent ledit couple Cr résistif, à recharger le stockeur 107 d'énergie.

Dans un mode de réalisation différent représenté sur la figure 4, le véhicule 100 automobile à motorisation hybride comprend, en plus, deux onduleurs. L'un des onduleurs est disposé entre le stockeur 107 d'énergie et la première source 102 motrice et l'autre est disposé entre le stockeur 107 d'énergie et la deuxième source 104 motrice.

Le véhicule 100 automobile comprend une boîte 109 de vitesse reliant la première source 102 motrice à la au moins une première roue 103.

Le véhicule 100 automobile comprend un premier système 110 de couplage couplant le moteur 101 thermique à la première source 102 motrice.

Selon le mode de réalisation représenté, les première et deuxième sources 102, 104 motrices sont des machines électriques et le stockeur 107 d'énergie est une batterie.

Selon le mode de réalisation représenté, la première source 102 motrice est couplée aux deux roues avant du véhicule 100 automobile. La deuxième source 104 motrice est couplée aux deux roues arrière du véhicule 100 automobile.

On comprendra par couplé, dans tout le texte de ce document, le fait qu'un système de couplage est dans un état couplé de sorte à transmettre un couple mécanique, par opposition à un état découplé pour lequel aucun couple mécanique ne peut être transmis par le système de couplage.

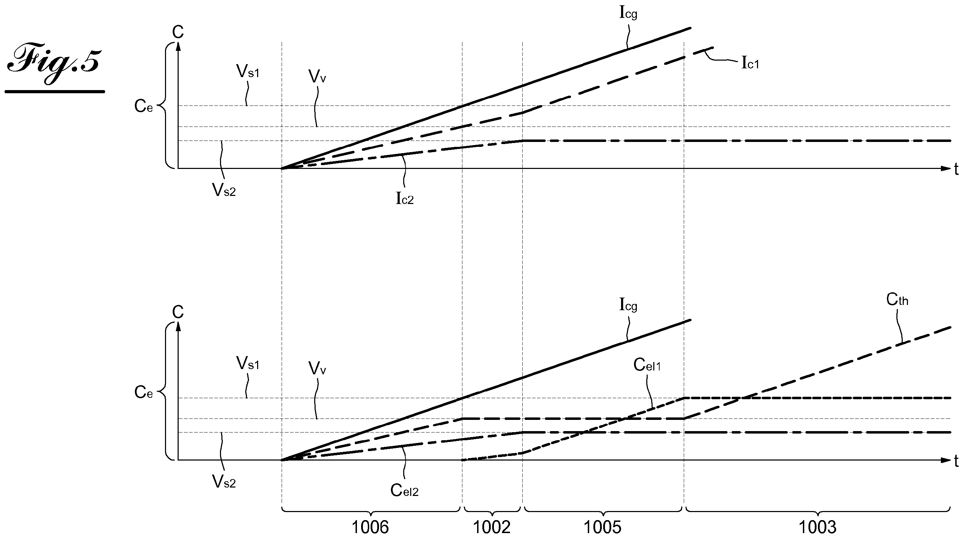

Un procédé de gestion de recharge du stockeur 107 d'énergie du véhicule 100 automobile à motorisation hybride est représenté sur les graphiques des figures 5 à 7.

Le procédé de gestion décrit est mis en place uniquement dans les phases de vie du véhicule 100 automobile où le moteur 101 thermique est en fonctionnement.

On comprendra par « moteur thermique en fonctionnement » dans tout le texte de ce document le fait que ce moteur 101 thermique est à un régime de rotation non nul, le premier système 110 de couplage étant dans un état couplé.

Sur les figures 5 à 7, les graphiques supérieurs représentent une instruction Icg de couple global (en trait plein), une instruction Ic1 de couple primaire (en trait pointillé) et une instruction Ic2 de couple secondaire (en trait mixte).

Selon l'invention, l'instruction Ic1 de couple primaire et l'instruction Ic2 de couple secondaire permettent sensiblement l'obtention de l'instruction Icg de couple global.

Les instructions Icg, Ic1, Ic2 de couple global, de couple primaire et de couple secondaire sont imposées pour, par exemple, répondre à des contraintes de stabilité du véhicule 100 automobile.

Les graphiques inférieurs des figures 5 à 7 représentent l'instruction Icg de couple global (en trait plein), un couple Cth du moteur 101 thermique (en trait pointillé large), un couple Cel1 de la première source 102 motrice (en trait pointillé fin) et un couple de la deuxième source 104 motrice (en trait mixte).

Sauf spécification contraire, selon l'invention :
- la somme du couple Cth du moteur 101 thermique et du couple Cel1 de la première source 102 motrice permet sensiblement l'obtention de l'instruction Ic1 de couple primaire,
- le couple Cel2 de la deuxième source 104 motrice permet sensiblement l'obtention de l'instruction Ic2 de couple secondaire.

Les couples Ce entrainants, conférant une force au véhicule automobile permettant de mouvoir le véhicule automobile, sont illustrés positivement. Les couples Cr résistifs, conférant une force au véhicule automobile permettant de ralentir le déplacement ou le déplacement potentiel du véhicule automobile, sont représentés négativement.

La figure 5 représente le procédé de gestion lorsque la quantité d'énergie stockée par le stockeur 107 d'énergie est supérieure à un seuil dit de recharge délestable.

On notera dans tout le texte de ce document, que le seuil dit de recharge délestable et un seuil dit de recharge prioritaire sont des seuils de quantité d'énergie stockée par le stockeur 107.

Lorsque la quantité d'énergie stockée par le stockeur 107 d'énergie est supérieure au seuil de recharge délestable, le stockeur 107 d'énergie n'est pas rechargé.

Dans cette phase de vie du véhicule 100 automobile le procédé de gestion comprend une étape 1006 dite de suivi dans laquelle le couple Cth du moteur 101 thermique est inférieur à une valeur Vv de couple virtuelle, le couple Cel1 de la première source 102 motrice est nul et le couple Cel2 de la deuxième source 104 motrice est inférieur à une deuxième valeur Vs2 de couple de saturation.

Le couple Cth du moteur 101 thermique permet d'obtenir sensiblement l'instruction Ic1 de couple primaire.

Le procédé de gestion comprend une étape 1002 dite de limitation virtuelle dans laquelle le couple Cth du moteur 101 thermique est sensiblement égal à la valeur Vv de couple virtuelle, le couple Cel1 de la première source 102 motrice est inférieur à une première valeur Vs1 de couple de saturation et le couple Cel2 de la deuxième source 102 motrice est inférieur à la deuxième valeur Vs2 de couple de saturation.

Le couple Cth du moteur 101 thermique, maintenu à la valeur Vv de couple virtuelle, permet d'éviter une surconsommation du moteur 101 thermique qui, dans ce cas de figure, s'avèrerait inutile.

Le couple Cel1 de la première source 102 motrice augmente alors pour permettre la réalisation de l'instruction Ic1 de couple primaire.

Selon le mode de réalisation représenté, dans cette étape 1002 de limitation virtuelle, la première source 102 motrice produit un couple Ce entrainant de sorte que la somme du couple Cth du moteur 101 thermique et du couple Cel1 de la première source 102 motrice permettent sensiblement l'obtention de l'instruction Ic1 de couple primaire.

Le procédé de gestion comprend une étape 1005 dite de deuxième saturation dans laquelle le couple Cel2 de la deuxième source 104 motrice est sensiblement égal à une deuxième valeur Vs2 de couple de saturation. Dans le cas présenté, le couple Cth du moteur 101 thermique est sensiblement égal à la valeur Vv de couple virtuelle et le couple Cel1 de la première source 102 motrice est inférieur à la première valeur Vs1 de couple de saturation.

Le procédé de gestion comprend une étape 1003 dite de première saturation dans laquelle le couple Cel1 de la première source 102 motrice est sensiblement égal à la première valeur Vs1 de couple de saturation. Dans le cas présenté, le couple Cel2 de la deuxième source 104 motrice est sensiblement égal à la deuxième valeur Vs2 de couple de saturation.

Le couple Cth du moteur 101 thermique est alors supérieur à la valeur Vv de couple virtuelle pour permettre la réalisation de l'instruction Ic1 de couple primaire.

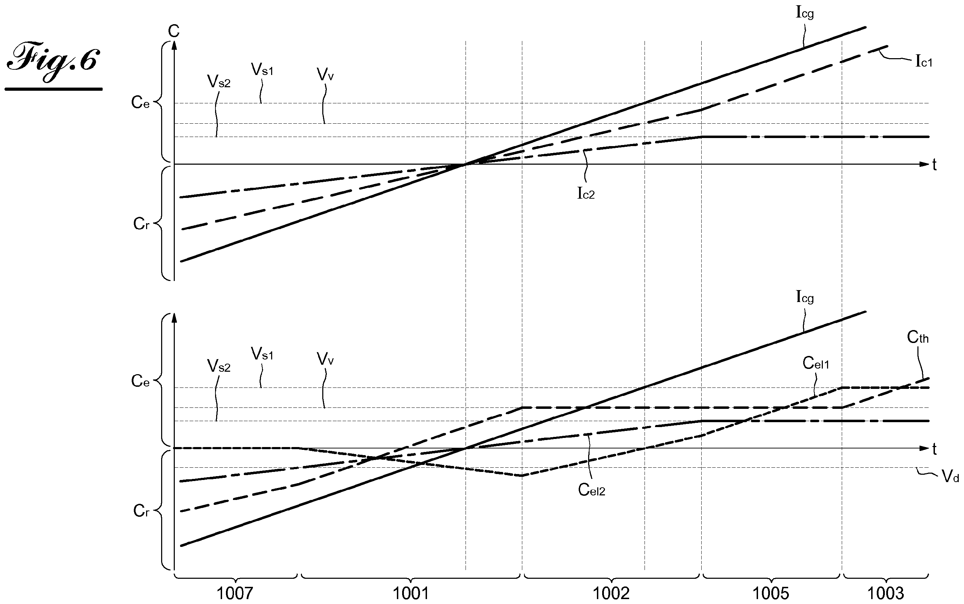

Dans la figure 6, les étapes 1001, 1002, et 1005 représentent le procédé de gestion lorsque la quantité d'énergie stockée par le stockeur 107 d'énergie est inférieure au seuil de recharge délestable et supérieure à un seuil dit de recharge prioritaire. Dans ces conditions, le couple Cth du moteur 101 thermique est limité le plus longtemps possible à la valeur Vv de couple virtuelle, le couple Cel1 de la première source 102 motrice permettant sensiblement l'obtention de l'instruction Ic1 de couple primaire jusqu'à égalité avec la première valeur Vs1 de couple de saturation. Le stockeur 107 d'énergie étant rechargé en fonction de l'instruction Icg de couple global.

La figure 6 illustre en outre une étape 1007 du procédé de gestion, étape dite de dérivation inversée dans laquelle l'instruction Icg de couple global est résistive. Dans cette étape 1007 de dérivation inversée le couple Cel2 de la deuxième source 104 motrice est inférieur à une valeur de couple Vd dite de recharge délestable et le couple Cel1 de la première source 102 motrice est limité à une valeur qui est, dans le mode de réalisation représenté, nulle.

Dans cette étape 1007 de dérivation inversée la quantité d'énergie rechargée dans le stockeur 107 d'énergie est supérieure au seuil de recharge délestable.

Cependant, cette étape 1007 de dérivation inversée empêche une consommation d'énergie par la première source 102 motrice, stockée dans le stockeur 107 d'énergie, alors que l'instruction Icg de couple global est résistive.

Contrairement aux autres étapes du procédé de gestion, dans l'étape 1007 de dérivation inversée le couple Cth du moteur 101 thermique est sensiblement égal à l'instruction Ic1 de couple primaire permettant l'obtention de l'instruction Icg de couple global.

Dans cette étape 1007 de dérivation inversée le couple Cth du moteur 101 thermique est limité à un couple Cr résistif maximal, en valeur absolue, dans lequel l'injection de carburant alimentant le moteur 101 thermique est coupée.

Le procédé de gestion comprend une étape 1001 de recharge du stockeur 107 d'énergie dite de recharge délestable dans laquelle le couple Cth du moteur 101 thermique est inférieur à la valeur Vv de couple virtuelle, le couple Cel1 de la première source 102 motrice est inférieur à la première valeur Vs1 de couple de saturation et le couple Cel2 de la deuxième source 102 motrice est inférieur à la deuxième valeur Vs2 de couple de saturation.

La somme du couple Cel1 de la première source 102 motrice et du couple Cel2 de la deuxième source 104 motrice est sensiblement égale à la valeur de couple Vd de recharge délestable.

Le couple Cth du moteur 101 thermique est supérieur à l'instruction Ic1 de couple primaire pour permettre la réalisation de l'instruction Icg de couple global du véhicule automobile.

Le procédé de gestion comprend une étape 1002 de limitation virtuelle dans laquelle le couple Cth du moteur 101 thermique est sensiblement égal à la valeur Vv de couple virtuelle, le couple Cel1 de la première source 102 motrice est inférieur à la première valeur Vs1 de couple de saturation et le couple Cel2 de la deuxième source 102 motrice est inférieur à la deuxième valeur Vs2 de couple de saturation.

Le couple Cth du moteur 101 thermique, maintenu à la valeur Vv de couple virtuelle, permet d'éviter une surconsommation du moteur 101 thermique qui, dans ce cas de figure, s'avèrerait inutile.

Le couple Cel1 de la première source 102 motrice augmente alors, diminuant la recharge du stockeur d'énergie, pour permettre la réalisation de l'instruction Ic1 de couple primaire.

Dans cette étape 1002 de limitation virtuelle la première source 102 motrice produit tout d'abord un couple Cr résistif puis un couple Ce entrainant de sorte que la somme du couple Cth du moteur 101 thermique et du couple Cel1 de la première source 102 motrice permet sensiblement l'obtention de l'instruction Ic1 de couple primaire.

Le procédé de gestion comprend une étape 1005 de deuxième saturation dans laquelle le couple Cel2 de la deuxième source 104 motrice est sensiblement égal à une deuxième valeur Vs2 de couple de saturation. Dans le cas présenté, le couple Cth du moteur 101 thermique est sensiblement égal à la valeur Vv de couple virtuelle et le couple Cel1 de la première source 102 motrice est inférieur à la première valeur Vs1 de couple de saturation.

Le procédé de gestion comprend une étape 1003 de première saturation dans laquelle le couple Cel1 de la première source 102 motrice est sensiblement égal à la première valeur Vs1 de couple de saturation. Dans le cas présenté, le couple Cel2 de la deuxième source 104 motrice est sensiblement égal à la deuxième valeur Vs2 de couple de saturation.

Le couple Cth du moteur 101 thermique est alors supérieur à la valeur Vv de couple virtuelle pour permettre la réalisation de l'instruction Ic1 de couple primaire.

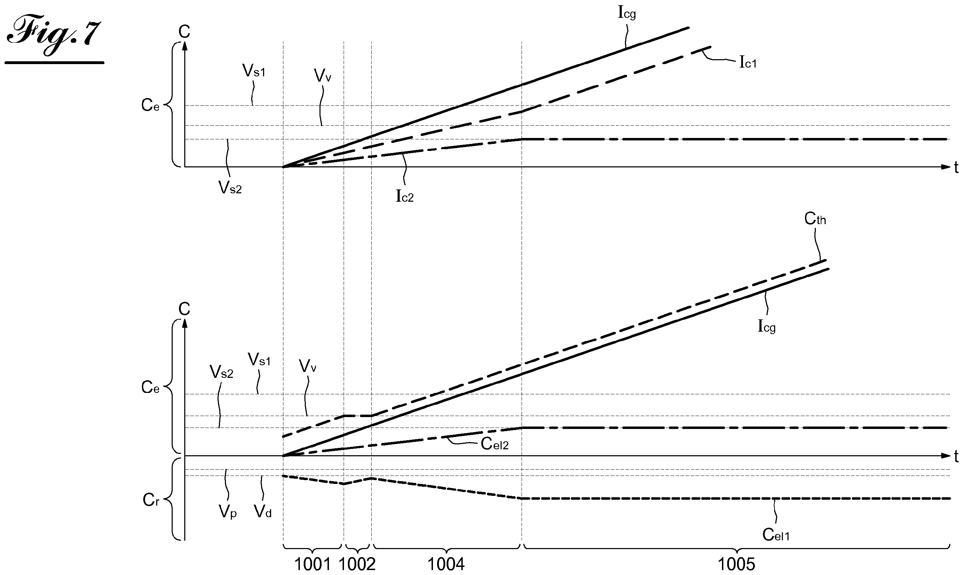

La figure 7 représente le procédé de gestion lorsque la quantité d'énergie stockée par le stockeur 107 d'énergie est inférieure au seuil de recharge prioritaire.

Lorsque la quantité d'énergie stockée par le stockeur 107 d'énergie est inférieure au seuil de recharge prioritaire, la somme du couple Cel1 de la première source 102 motrice et du couple Cel2 de la deuxième source 104 motrice est, au minimum, en valeur absolue, sensiblement égale à une valeur de couple Vp de recharge prioritaire permettant une recharge du stockeur 107 d'énergie.

La valeur de couple Vp de recharge prioritaire est supérieure à la valeur de couple Vd de recharge délestable de sorte que, lorsque la somme du couple Cel1 de la première source 102 motrice et du couple Cel2 de la deuxième source 104 motrice est sensiblement égale à la valeur de couple Vp de recharge prioritaire les première et deuxième sources 102, 104 motrices consomment moins d'énergie mais rechargent moins le stockeur d'énergie que lorsque cette somme est sensiblement égale à la valeur de couple Vd de recharge délestable.

Dans cette phase de vie du véhicule 100 automobile le procédé de gestion comprend une étape 1001 de recharge délestable dans laquelle le couple Cth du moteur 101 thermique est inférieur à la valeur Vv de couple virtuelle, le couple Cel1 de la première source 102 motrice est inférieur à la première valeur Vs1 de couple de saturation et le couple Cel2 de la deuxième source 102 motrice est inférieur à la deuxième valeur Vs2 de couple de saturation.

La somme du couple Cel1 de la première source 102 motrice et du couple Cel2 de la deuxième source 104 motrice est sensiblement égale à la valeur de couple Vd de recharge délestable.

Le couple Cth du moteur 101 thermique est supérieur à l'instruction Ic1 de couple primaire pour permettre la réalisation de l'instruction Icg de couple global du véhicule automobile.

Le procédé de gestion comprend une étape 1002 de limitation virtuelle dans laquelle le couple Cth du moteur 101 thermique est sensiblement égal à une valeur Vv de couple virtuelle, le couple Cel1 de la première source 102 motrice est inférieur à la première valeur Vs1 de couple de saturation et le couple Cel2 de la deuxième source 102 motrice est inférieur à la deuxième valeur Vs2 de couple de saturation.

Le couple Cth du moteur 101 thermique, maintenu à la valeur Vv de couple virtuelle, permet d'éviter une surconsommation du moteur 101 thermique qui, dans ce cas de figure, s'avèrerait inutile.

Dans cette étape 1002 de limitation virtuelle le couple Cel1 de la première source 102 motrice augmente alors, diminuant la recharge du stockeur d'énergie, pour permettre la réalisation de l'instruction Ic1 de couple primaire tant que la somme du couple Cel1 de la première source 102 motrice et du couple Cel2 de la deuxième source 104 motrice est inférieure à la valeur de couple Vp de de recharge prioritaire.

Le procédé de gestion comprend une étape 1004 de recharge du stockeur 107 d'énergie dite de recharge prioritaire dans laquelle la somme du couple Cel1 de la première source 102 motrice et du couple Cel2 de la deuxième source 104 motrice est sensiblement égale à la valeur de couple Vp de recharge prioritaire forçant la continuation de la recharge du stockeur d'énergie.

Le couple Cth du moteur 101 thermique devient alors supérieur à la valeur Vv de couple virtuelle pour permettre la réalisation de l'instruction Ic1 de couple primaire.

Le procédé de gestion comprend une étape 1005 de deuxième saturation dans laquelle le couple Cel2 de la deuxième source 104 motrice est sensiblement égal à la deuxième valeur Vs2 de couple de saturation. Dans le cas présenté, le couple Cel1 de la première source 102 motrice permet, en tenant compte du couple Cel2 de la deuxième source 104 motrice, l'obtention de la valeur de couple Vp de recharge prioritaire.

Le couple Cth du moteur 101 thermique permet la réalisation de l'instruction Ic1 de couple primaire.

Dans un mode de réalisation différent, le procédé de gestion de recharge du stockeur 107 d'énergie prend en compte le rendement de la première source 102 motrice et de la deuxième source 104 motrice.

Les graphiques représentés sur les figures sont des exemples d'application du procédé de gestion dont les étapes peuvent être disposées dans des ordres différents que ceux représentés si l'instruction Icg de couple global présente une forme différente.

Le procédé présenté permet ainsi la gestion de la recharge du stockeur 107 d'énergie d'un véhicule 100 automobile à motorisation hybride et comprenant plusieurs roues motrices, la motricité des roues étant apte à être gérée indépendamment. Le procédé de gestion permet de limiter la consommation du moteur 101 thermique tout en assurant la recharge du stockeur 107 d'énergie.

L'étape 1007 de dérivation inversée empêche une consommation d'énergie par la première source 102 motrice, stockée dans le stockeur 107 d'énergie, alors que l'instruction Icg de couple global est résistive.

## Revendications

1. Procédé de gestion de recharge d'un stockeur (107) d'énergie d'un véhicule (100) automobile comprenant un moteur (101) thermique en fonctionnement, une première source (102) motrice non thermique couplée au moteur (101) thermique et à au moins une première roue (103) du véhicule (100) automobile, ainsi qu'une deuxième source (104) motrice non thermique couplée à au moins une deuxième roue (106) du véhicule (100) automobile, la première source (102) motrice non thermique et la deuxième source (104) motrice non thermique étant chacune aptes à échanger de l'énergie avec ledit stockeur (107) d'énergie, le procédé de gestion comprenant une étape d'interdiction de dépassement d'une valeur de couple (Vd) de recharge dite délestable pour la recharge du stockeur (107) d'énergie par la somme des couples (Cel1, Cel2) des première et deuxième sources (102, 104) motrices non thermiques, le procédé de gestion étant **caractérisé en ce qu'**il comprend une étape de commande d'un couple global aux roues négatif, ce couple global étant réparti entre la au moins une première roue (103) et la au moins une deuxième roue (106), une étape de détection d'un dépassement de la valeur de couple (Vd) de recharge délestable par le couple (Cel2) de la deuxième source (104) motrice non thermique et, en réaction à ladite étape de détection, une étape de limitation du couple (Cel1) généré par la première source (102) motrice non thermique et d'autorisation de dépassement de ladite valeur de couple (Vd) de recharge délestable par la somme des couples (Cel1, Cel2) des première et deuxième sources (102, 104) motrices non thermiques pour la recharge du stockeur (107) d'énergie .

2. Procédé de gestion selon la revendication précédente, **caractérisé en ce que**, lors de l'étape de limitation, le couple (Cel1) généré par la première source (102) motrice non thermique est limité à une valeur nulle.

3. Procédé selon l'une quelconque des revendications précédentes, **caractérisé en ce qu'**il comprend une étape (1004) de recharge du stockeur (107) d'énergie dite de recharge prioritaire dans laquelle la somme du couple (Cel1) de la première source (102) motrice non thermique et du couple (Cel2) de la deuxième source (104) motrice non thermique est égale à une valeur de couple (Vp) de recharge prioritaire supérieure à la valeur de couple (Vd) de recharge délestable.

4. Procédé selon l'une quelconque des revendications précédentes, **caractérisé en ce qu'**il comprend une étape (1002) dite de limitation virtuelle du couple (Cth) du moteur thermique à une valeur (Vv) de couple virtuelle tant que le couple (Cel1) de la source motrice est inférieur à une valeur (Vs1) de couple de saturation.

5. Véhicule (100) automobile à motorisation hybride, le véhicule (100) automobile comprenant :
- un moteur (101) thermique,
- une première source (102) motrice non thermique couplée au moteur (101) thermique et à au moins une première roue (103) du véhicule (100) automobile,
- une deuxième source (104) motrice non thermique couplée à au moins une deuxième roue (106) du véhicule (100) automobile par le biais d'un deuxième système (105) de couplage,
- un stockeur (107) d'énergie relié à la première source (102) motrice non thermique et à la deuxième source (104) motrice non thermique, la première source (102) motrice non thermique et la deuxième source (104) motrice non thermique étant aptes à échanger de l'énergie avec ledit stockeur (107) d'énergie,
- un moyen de mis en œuvre du procédé de gestion de recharge du stockeur (107) d'énergie selon l'une quelconque des revendications précédentes.

6. Véhicule (100) automobile selon la revendication précédente, **caractérisé en ce que** la première source (102) motrice non thermique et la deuxième source (104) motrice non thermique sont des machines électriques et le stockeur (107) d'énergie est une batterie.

7. Véhicule (100) automobile selon l'une quelconque des revendications 5 ou 6, **caractérisé en ce que** la première source (102) motrice non thermique est couplée aux roues avant du véhicule (100) automobile et la deuxième source (104) motrice non thermique est couplée aux roues arrières du véhicule (100) automobile.

8. Véhicule (100) automobile selon l'une quelconque des revendications 5 à 7, **caractérisé en ce que** la première source (102) motrice non thermique est couplée à ladite au moins une première roue par le biais d'une boîte (109) de vitesse.

9. Véhicule (100) automobile selon l'une quelconque des revendications 5 à 8, **caractérisé en ce que** le moteur (101) thermique est couplé à la première source (102) motrice non thermique par le biais d'un premier système (110) de couplage.

10. Véhicule (100) automobile selon l'une quelconque des revendications 5 à 9, **caractérisé en ce que** le stockeur (107) d'énergie est relié à la première source (102) motrice non thermique par le biais d'un onduleur et à la deuxième source (104) motrice non thermique par le biais d'un autre onduleur.

## Patentansprüche

1. Verfahren zum Steuern des Wiederaufladens eines Energiespeichers (107) eines Kraftfahrzeugs (100), umfassend einen Verbrennungsmotor (101) in Betrieb, eine erste nicht-thermische Antriebsquelle (102), die mit dem Verbrennungsmotor (101) und mit angekoppelt ist mindestens ein erstes Rad (103) des Kraftfahrzeugs (100), sowie eine zweite nichtthermische Antriebsquelle (104), die mit mindestens einem zweiten Rad (106) des Kraftfahrzeugs (100) gekoppelt ist, wobei die erste Quelle (102) nicht-thermischer Motor und die zweite nicht-thermische Motorquelle (104), die jeweils in der Lage sind, Energie mit dem Energiespeicher (107) auszutauschen, wobei das Verwaltungsverfahren einen Schritt zum Verhindern des Überschreitens eines Werts einer sogenannten Abwurf-Wiederaufladung umfasst Drehmoment (Vd) zum Wiederaufladen des Energiespeichers (107) durch die Summe der Drehmomente (Cell, Cel2) der ersten und zweiten nichtthermischen Antriebsquelle (102, 104), wobei das Steuerungsverfahren **dadurch gekennzeichnet ist, dass** es einen Schritt umfasst der Steuerung eines Gesamtdrehmoments an den Rädern n negativ ist, wobei dieses Gesamtdrehmoment zwischen dem mindestens einen ersten Rad (103) und dem mindestens einen zweiten Rad (106) verteilt wird, einen Schritt zum Erfassen einer Überschreitung des Nachladedrehmomentwerts (Vd), der durch das Drehmoment (Cel2) der zweiten nichtthermischen Antriebsquelle (104) und als Reaktion auf den Schritt des Erfassens einen Schritt des Begrenzens des von der ersten nicht-thermischen Antriebsquelle (102) erzeugten Drehmoments (Cel1) und des Genehmigens dessen Überschreitung Nachlademomentwert (Vd), der durch die Summe der Drehmomente (Cel1, Cel2) der ersten und zweiten nichtthermischen Antriebsquelle (102, 104) zum Nachladen des Energiespeichers (107) abführbar ist.

2. Steuerungsverfahren nach dem vorhergehenden Anspruch, **dadurch gekennzeichnet, dass** während des Begrenzungsschritts das von der ersten nichtthermischen Antriebsquelle (102) erzeugte Drehmoment (Cel1) auf einen Nullwert begrenzt wird.

3. Verfahren nach einem der vorhergehenden Ansprüche, **dadurch gekennzeichnet, dass** es einen Schritt (1004) zum Nachladen des sogenannten Vorrang-Nachladeenergiespeichers (107) umfasst, in dem die Summe des Drehmoments (Cel1) der ersten Quelle (102) nicht-thermische Leistungsquelle und das Drehmoment (Cel2) der zweiten nicht-thermischen Leistungsquelle (104) gleich einem Prioritätswiederauflade-Drehmomentwert (Vp) ist, der größer als der Lastabwurf-Drehmomentwert (Vd) ist.

4. Verfahren nach einem der vorhergehenden Ansprüche, **dadurch gekennzeichnet, dass** es einen Schritt (1002) umfasst, der als virtuelle Begrenzung des Drehmoments (Cth) der Wärmekraftmaschine auf einen Wert (Vv) des virtuellen Drehmoments bezeichnet wird, solange das Drehmoment (Cel1) der Antriebsquelle kleiner als ein Sättigungsdrehmomentwert (Vs1) ist.

5. Kraftfahrzeug (100) mit Hybridmotorisierung, wobei das Kraftfahrzeug (100) umfasst:
- eine Wärmekraftmaschine (101),
- eine erste nichtthermische Antriebsquelle (102), die mit der Wärmekraftmaschine (101) und mit mindestens einem ersten Rad (103) des Kraftfahrzeugs (100) gekoppelt ist,
- eine zweite nichtthermische Antriebsquelle (104), die über ein zweites Kopplungssystem (105) mit mindestens einem zweiten Rad (106) des Kraftfahrzeugs (100) gekoppelt ist,
- einen Energiespeicher (107), der mit der ersten nicht-thermischen Antriebsquelle (102) und mit der zweiten nicht-thermischen Antriebsquelle (104), der ersten nichtthermischen Antriebsquelle (102) und der zweiten nicht-thermischen Antriebsquelle verbunden ist (104) Energie mit dem Energiespeicher (107) austauschen kann,
- zum Implementieren des Verfahrens zum Steuern des Wiederaufladens des Energiespeichers (107) nach einem der vorhergehenden Ansprüche.

6. Kraftfahrzeug (100) nach dem vorhergehenden Anspruch, **dadurch gekennzeichnet, dass** die erste nichtthermische Motorquelle (102) und die zweite nichtthermische Motorquelle (104) elektrische Maschinen sind und der Energiespeicher (107) eine Batterie ist.

7. Kraftfahrzeug (100) nach einem der Ansprüche 5 oder 6, **dadurch gekennzeichnet, dass** die erste nichtthermische Antriebsquelle (102) mit den Vorderrädern des Kraftfahrzeugs (100) gekoppelt ist und die zweite nichtthermische Antriebsquelle (104) mit den Hinterrädern des Kraftfahrzeugs (100) gekoppelt ist.

8. Kraftfahrzeug (100) nach einem der Ansprüche 5 bis 7, **dadurch gekennzeichnet, dass** die erste nichtthermische Antriebsquelle (102) mit dem mindestens einen ersten Rad mittels eines Getriebes (109) gekoppelt ist.

9. Kraftfahrzeug (100) nach einem der Ansprüche 5 bis 8, **dadurch gekennzeichnet, dass** der Verbrennungsmotor (101) mit der ersten nichtthermischen Antriebsquelle (102) mittels eines ersten Kopplungssystems (110) gekoppelt ist.

10. Kraftfahrzeug (100) nach einem der Ansprüche 5 bis 9, **dadurch gekennzeichnet, dass** der Energiespeicher (107) über einen Wechselrichter mit der ersten nicht-thermischen Motorquelle (102) und mit der zweiten nicht-thermischen Antriebsquelle (104) über einen anderen Wechselrichter.

## Claims

1. Method for managing the recharging of an energy storer (107) of a motor vehicle (100) comprising a thermal engine (101) in operation, a first non-thermal driving source (102) coupled to the thermal engine (101) and to at least one first wheel (103) of the motor vehicle (100), as well as a second non-thermal drive source (104) coupled to at least one second wheel (106) of the motor vehicle (100), the first source (102) non-thermal motor and the second non-thermal motor source (104) each being capable of exchanging energy with said energy store (107), the management method comprising a step of prohibiting the exceeding of a value of so-called shedding recharging torque (Vd) for recharging the energy storer (107) by the sum of the torques (Cel1, Cel2) of the first and second non-thermal driving sources (102, 104), the management method being **characterized in that** it comprises a step of controlling an overall torque at the wheels n negative, this overall torque being distributed between the at least one first wheel (103) and the at least one second wheel (106), a step of detecting an overrun of the recharging torque value (Vd) that can be relieved by the torque (Cel2) of the second non-thermal driving source (104) and, in response to said step of detecting, a step of limiting the torque (Cel1) generated by the first non-thermal driving source (102) and of authorizing exceeding of said recharging torque value (Vd) which can be shed by the sum of the torques (Cel1, Cel2) of the first and second non-thermal driving sources (102, 104) for recharging the energy storer (107).

2. Management method according to the preceding claim, **characterized in that**, during the limitation step, the torque (Cel1) generated by the first non-thermal driving source (102) is limited to a zero value.

3. Method according to any one of the preceding claims, **characterized in that** it comprises a step (1004) of recharging the so-called priority recharging energy storer (107) in which the sum of the torque (Cel1) of the first source (102) non-thermal power source and the torque (Cel2) of the second non-thermal power source (104) is equal to a priority recharge torque value (Vp) greater than the load shedding torque value (Vd).

4. Method according to any one of the preceding claims, **characterized in that** it comprises a step (1002) called virtual limitation of the torque (Cth) of the heat engine to a value (Vv) of virtual torque as long as the torque (Cel1) of the driving source is less than a saturation torque value (Vs1).

5. Motor vehicle (100) with hybrid motorization, the automotive vehicle (100) comprising :
- a heat engine (101),
- a first non-thermal drive source (102) coupled to the thermal engine (101) and to at least one first wheel (103) of the motor vehicle (100),
- a second non-thermal drive source (104) coupled to at least one second wheel (106) of the motor vehicle (100) via a second coupling system (105),
- an energy storer (107) connected to the first non-thermal motive source (102) and to the second non-thermal motive source (104), the first non-thermal motive source (102) and the second non-thermal motive source (104) being capable of exchanging energy with said energy storer (107),
- for implementing the method for managing the recharging of the energy storer (107) according to any one of the preceding claims.

6. Motor vehicle (100) according to the preceding claim, **characterized in that** the first non-thermal motor source (102) and the second non-thermal motor source (104) are electric machines and the energy storer (107) is a battery.

7. Motor vehicle (100) according to any one of Claims 5 or 6, **characterized in that** the first non-thermal driving source (102) is coupled to the front wheels of the motor vehicle (100) and the second non-thermal driving source (104) is coupled to the rear wheels of the motor vehicle (100).

8. Motor vehicle (100) according to any one of Claims 5 to 7, **characterized in that** the first non-thermal driving source (102) is coupled to the said at least one first wheel by means of a gearbox (109).

9. Motor vehicle (100) according to any one of Claims 5 to 8, **characterized in that** the thermal engine (101) is coupled to the first non-thermal driving source (102) by means of a first system (110) of coupling.

10. Motor vehicle (100) according to any one of Claims 5 to 9, **characterized in that** the energy storer (107) is connected to the first non-thermal motor source (102) via an inverter and to the second non-thermal driving source (104) via another inverter.
